# EUROPÄISCHE PATENTSCHRIFT

(11) **EP 2 719 967 B1**
(45) Veröffentlichungstag und Bekanntmachung des Hinweises auf die Patenterteilung: **06.02.2019**
(21) Anmeldenummer: 12187789.8
(22) Anmeldetag: 09.10.2012
(51) Int. Cl.: F24F 12/00, F24D 5/04, F24D 5/12

(54) **Verfahren zur Temperierung eines Gebäudes**
Method for the temperature control of a building
Procédé de thermorégulation d'un bâtiment

(43) Veröffentlichungstag der Anmeldung: 16.04.2014
(73) Patentinhaber: Roth Werke GmbH, 35232 Dautphetal (DE); Systemair GmbH, 97944 Windischbuch (DE)
(72) Erfinder:
(74) Vertreter: Rohmann, Michael

(56) Entgegenhaltungen:
- WO-A2-2006/066953
- AT-T- 60 654
- DE-A1- 19 827 511
- DE-A1-102009 057 481
- DE-C1- 19 836 891
- DE-U1- 8 906 427
- DE-U1- 29 706 131
- DE-U1- 29 720 577
- US-A1- 2011 100 043
- US-B1- 6 209 622

## Beschreibung

Die Erfindung betrifft ein Verfahren zur Temperierung eines Gebäudes und eine Hausstation zur Temperierung eines Gebäudes.

Verfahren und Hausstation der vorstehend genannten Art sind aus der Praxis grundsätzlich bekannt. Zur Sicherstellung einer guten Belüftung eines Raumes eines Gebäudes hat es sich bewährt, Luft aus dem Raum abzusaugen und die in der abgesaugten Abluft enthaltene Wärme auf eine angesaugte Außenluft zu übertragen, welche angesaugte Außenluft dann dem Raum als Zuluft zugeführt wird. Die Temperierung der Raumluft erfolgt dann, indem die Zuluft beispielsweise mit einer Wärmepumpe erwärmt oder gekühlt wird. Die aus der Praxis bekannten Verfahren und Hausstationen haben sich grundsätzlich bewährt, allerdings ist im Hinblick auf die steigenden Energiekosten die Effizienz der aus der Praxis bekannten Verfahren und Hausstationen verbesserungsbedürftig. Ein Beispiel für die bekannten Verfahren und Hausstationen zeigt das Dokument AT 60 654 T. Dieses Dokument offenbart die Merkmale der Oberbegriffe der Ansprüche 1 und 8.

Der Erfindung liegt daher das technische Problem zugrunde, ein Verfahren der eingangs genannten Art anzugeben, mit dem Gebäude problemlos und energieeffizient heizbar oder kühlbar sind und das sich durch eine einfache Ausführbarkeit auszeichnet. Weiterhin liegt der Erfindung das technische Problem zugrunde, eine Hausstation anzugeben, die sich durch einen einfachen Aufbau, eine einfache Steuerbarkeit und hohe Energieeffizienz auszeichnet.

Zur Lösung des technischen Problems lehrt die Erfindung ein Verfahren zur Temperierung eines Gebäudes, wobei aus einem Raum des Gebäudes ein Luftstrom abgezogen wird, wobei der Luftstrom in zumindest einen Sekundärluftstrom und in zumindest einen Abluftstrom aufgeteilt wird, wobei der Abluftstrom einem Fortluftwärmetauscher zugeführt wird, wobei in dem Fortluftwärmetauscher Wärme von einer Abluft des Fortluftstroms auf eine dem Fortluftwärmetauscher zugeführte Außenluft eines Außenluftstroms oder Wärme der Außenluft auf die Abluft zur Temperierung der Außenluft übertragen wird, wobei die in dem Fortluftwärmetauscher temperierte Außenluft dem Raum als Zuluft zugeführt wird, wobei der Sekundärluftstrom zumindest einer Wärmepumpe zugeführt und mit der Wärmepumpe temperiert wird und wobei der mit der Wärmepumpe temperierte Sekundärluftstrom in den Raum zurückgeführt wird. Es empfiehlt sich, dass die Zuluft bzw. ein Zuluftstrom vor dem Einblasen bzw. Eintreten in den Raum bzw. in das Gebäude mit der Sekundärluft vermischt wird. Vorzugsweise wird eine Mischung aus der Zuluft und der Sekundärluft in den Raum bzw. das Gebäude gefördert. Gemäß einer Ausführungsform verfügt das Gebäude über zumindest einen Raum und bevorzugt über eine Mehrzahl bzw. Vielzahl an Räumen. Vorteilhafterweise erfolgt die Aufteilung des Luftstroms in den Sekundärluftstrom und in den Abluftstrom derart, dass der Abluftstrom durch zumindest einen Nassraum des Gebäudes geführt wird, bevor der Abluftstrom erfindungsgemäß dem Fortluftwärmetauscher zugeführt wird. Nassraum meint im Rahmen der Erfindung beispielsweise ein Badezimmer, einen Toilettenraum oder eine Küche. Es empfiehlt sich, dass der Sekundärluftstrom einem Trockenraum des Gebäudes entnommen und nach der Temperierung mit der Wärmepumpe dem Trockenraum wieder zugeführt wird. Trockenraum meint im Rahmen der Erfindung einen Wohnbereich, beispielsweise ein Wohnzimmer oder Schlafzimmer, des Gebäudes. Zweckmäßigerweise ist eine Luftfeuchtigkeit in dem Nassraum höher als eine Luftfeuchtigkeit in dem Trockenraum. Gemäß einer Ausführungsform wird der Luftstrom einem Trockenraum entnommen, wobei gemäß einer Ausführungsform der Sekundärluftstrom der Wärmepumpe zugeführt wird und der Abluftstrom nach dem Durchströmen eines Nassraums dem Fortluftwärmetauscher zugeführt wird. Nach dem Durchströmen der Wärmepumpe wird der Sekundärluftstrom zweckmäßigerweise in den Trockenraum zurückgeführt. Es empfiehlt sich, dass die Zuluft in den Trockenraum des Gebäudes eingeführt wird. Es hat sich als vorteilhaft herausgestellt, dass eine Belüftung des Gebäudes mit der Außenluft bzw. Zuluft unabhängig von einer Temperierung einer Raumluft des Gebäudes durch die Sekundärluft mit der Wärmepumpe erfolgt bzw. durchgeführt wird. Die Zufuhr von Zuluft zu dem Gebäude erfolgt gemäß einer bevorzugten Ausführungsform unabhängig und/oder separat von der Temperierung der Sekundärluft.

Die Außenluft (Frischluft) wird in dem Fortluftwärmetauscher mit der Maßgabe temperiert, dass eine Temperatur der Zuluft ungefähr einer Temperatur der Abluft entspricht. Es ist möglich, dass die Temperatur der Zuluft geringer ist als die Temperatur der Abluft. Die Temperatur der Zuluft ist gemäß einer Ausführungsform geringer als die Temperatur der Abluft, wenn die Sekundärluft durch die Wärmepumpe erwärmt wird. Wenn die Sekundärluft durch die Wärmepumpe erwärmt wird, befindet sich die Wärmepumpe im Heizbetrieb. Es liegt im Rahmen der Erfindung, dass die Temperatur der Zuluft höher ist als die Temperatur der Abluft, wenn die Sekundärluft durch die Wärmepumpe gekühlt wird bzw. sich die Wärmepumpe in einem Kühlbetrieb befindet. Gemäß einer möglichen Ausführungsform weist die Abluft nach dem Austreten aus dem Fortluftwärmetauscher im Heizbetrieb der Wärmepumpe eine höhere Temperatur als die Außenluft und/oder Zuluft auf. Vorzugsweise weist die den Fortluftwärmetauscher verlassende Fortluft im Kühlbetrieb der Wärmepumpe eine höhere Temperatur als die Außenluft bzw. Zuluft auf.

Vorzugsweise beträgt das Verhältnis des Volumenstroms der Sekundärluft zum Volumenstrom der Zuluft 1:1 bis 10:1 und bevorzugt 2:1 bis 5:1. Es ist möglich, dass über die Sekundärluft und die Zuluft dem Gebäude, vorzugsweise dem Trockenraum, ein Gesamtvolumenstrom von 500 bis 1.000 m³ Luft pro Stunde, bevorzugt von 700 bis 800 m³ pro Stunde und besonders bevorzugt von ungefähr 750 m³ Luft pro Stunde zugeführt wird. Es empfiehlt sich, dass dem Gebäude pro Stunde ungefähr 100 bis 350 m³ Zuluft und/oder Sekundärluft pro Stunde und bevorzugt 100 bis 250 m³ Zuluft und/oder Sekundärluft pro Stunde zugeführt wird. Gemäß einer bewährten Ausführungsform ist der Volumenstrom der Fortluft genauso groß bzw. ungefähr genauso groß wie der Volumenstrom der Zuluft.

In einer bevorzugten Ausführungsform werden der Abluftstrom und der Außenluftstrom dem Fortluftwärmetauscher jeweils permanent (unterbrechungsfrei) und jeweils vorzugsweise regelbar zugeführt. Der Abluftstrom wird nach dem Durchströmen des Fortluftwärmetauschers als Fortluftstrom in die das Gebäude umgebende Atmosphäre entlassen bzw. gefördert. Zweckmäßigerweise ist ein Volumenstrom der Abluft und der Außenluft einstellbar. Dadurch, dass der Abluftstrom und der Außenluftstrom dem Fortluftwärmetauscher permanent zugeführt werden, erfolgt eine kontinuierliche Belüftung des Gebäudes. Das erfindungsgemäße Verfahren wird beispielsweise zur Belüftung von Niedrigenergiehäusern und/oder Passivhäusern verwendet. Besonders bevorzugt erfolgt die Belüftung des Gebäudes bzw. die Zufuhr der Zuluft und die Ausleitung der Abluft mit einem Leitungssystem, welches Leitungssystem von einem Sekundärluftleitungssystem, mit welchem Sekundärluftleitungssystem die Sekundärluft geführt wird, verschieden bzw. separat ausgebildet ist.

Es hat sich als vorteilhaft herausgestellt, dass der Feuchtigkeitsgehalt der Zuluft und/oder Sekundärluft eingestellt wird. Besonders bevorzugt wird in dem Fortluftwärmetauscher die in der Abluft enthaltene Feuchtigkeit auf die dem Fortluftwärmetauscher zugeführte Außenluft übertragen, so dass die dem Raum als Zuluft zugeführte Außenluft die gleiche bzw. im Wesentlichen die gleiche Feuchtigkeit aufweist wie die als Fortluft an die Umgebung des Gebäudes abgegebene Abluft. Auf diese Weise wird eine kontinuierliche Trocknung der Gebäudeluft bzw. Raumluft verhindert.

Es ist möglich, dass mit der Wärmepumpe die Sekundärluft bevorzugt gleichzeitig mit der Erwärmung eines Wärmeträgermediums temperiert wird, mit welchem Wärmeträgermedium vorzugsweise Wasser erwärmt wird. Vorzugsweise ist das Wasser Trinkwasser bzw. Brauchwasser. Mit dem Wärmeträgermedium ist mit anderen Worten bevorzugt Trinkwasser und besonders bevorzugt lediglich Trinkwasser erwärmbar. Es empfiehlt sich, dass der Sekundärluftstrom mit der Wärmepumpe gekühlt oder erwärmt wird. Besonders bevorzugt ist aus dem Heizbetrieb der Wärmepumpe vorteilhafterweise reversibel in den Kühlbetrieb der Wärmpumpe umschaltbar. Auf diese Weise ist es beispielsweise möglich, in Abhängigkeit vorzugsweise einer Abluftemperatur die Sekundärluft mit der Wärmepumpe zu erwärmen oder zu kühlen. Das Wärmeträgermedium wird gemäß einer Ausführungsform im Kühlbetrieb und im Heizbetrieb der Wärmepumpe erwärmt. Die Wärmepumpe ist im Rahmen der Erfindung als direktverdampfendes, reversibles Kältesystem ausgebildet.

Vorzugsweise wird die Temperatur des Gebäudes mit einem vom Abluftstrom beaufschlagten Sensor erfasst, wobei mit dem Sensor zumindest eine aus der Gruppe "Temperatur, Luftfeuchtigkeit, Kohlendioxidkonzentration, Anwesenheitsfunktion" ausgewählte Messgröße überwacht wird. Zweckmäßigerweise wird durch den Sensor die Wärmepumpe im Heizbetrieb oder Kühlbetrieb aktiviert. Bevorzugt ist der Sensor als Temperatursensor ausgebildet, der die Temperatur des Abluftstroms misst. Wird durch den Sensor eine Temperatur festgestellt, die außerhalb eines dem Sensor vorgegebenen bzw. vorgebbaren Temperaturbereichs liegt, wird durch den Sensor vorzugsweise die Wärmepumpe aktiviert. Die Sekundärluft wird gekühlt, wenn die vorzugsweise von dem Sensor erfasste Temperatur oberhalb eines dem Sensor vorgegebenen Temperaturintervalls bzw. einer dem Sensor vorgegebenen Temperatur liegt. Es empfiehlt sich, dass die Sekundärluft erwärmt wird, wenn die von dem Sensor festgestellte Temperatur unterhalb des vorgegebenen Temperaturintervalls bzw. der vorgegebenen Temperatur liegt. Vorzugsweise erfasst der Sensor die Luftfeuchtigkeit und/oder Kohlendioxidkonzentration der Abluft und regelt vorzugsweise in Abhängigkeit der Luftfeuchtigkeit und/oder der Kohlendioxidkonzentration den Volumenstrom der Zuluft und/oder den Volumenstrom und/oder einen Feuchtegehalt der bevorzugt temperierten Sekundärluft. Anwesenheitsfunktion meint im Rahmen der Erfindung, dass durch den Sensor sich im Gebäude bzw. in dem Raum aufhaltende Personen erfasst werden. Durch den Sensor werden eine Steuerung des Volumenstroms der Zuluft und/oder des Volumenstroms der Sekundärluft und/oder die Temperierung der Sekundärluft bewirkt, sobald Personen durch den Sensor detektiert werden. Zweckmäßigerweise wird, wenn der Sensor den Aufenthalt einer Person in dem Raum bzw. in dem Gebäude feststellt, der Volumenstrom der Zuluft und/oder der Volumenstrom der Sekundärluft erhöht und/oder die Sekundärluft temperiert.

Bevorzugt wird eine Leistung der Wärmepumpe und/oder der Zuluftstrom und/oder der Abluftstrom und/oder der Sekundärluftstrom vorzugsweise durch den Sensor gesteuert. Zweckmäßigerweise wird die Leistung der Wärmepumpe gesteuert, indem bevorzugt eine Drehzahl eines Kompressors (Verdichters) gesteuert wird, mit welchem Kompressor ein Kühlmittel der Wärmepumpe verdichtet wird.

Erfindungsgemäss wird der Wärmepumpe als Wärmequelle bzw. quellseitig Abluft und/oder Fortluft zugeführt. Besonders bevorzugt wird der Wärmepumpe quellseitig die den Fortluftwärmetauscher verlassende Fortluft vorzugsweise im Heizbetrieb zugeführt. Der Fortluftwärmetauscher weist im Rahmen der Erfindung einen Wirkungsgrad von weniger als 1 aus, so dass die den Fortluftwärmetauscher verlassende Fortluft eine höhere Temperatur beziehungsweise einen höheren Energieinhalt als die Außenluft aufweist, insbesondere wenn die Temperatur in dem Gebäude höher ist als die Temperatur der Außenluft. Durch den Einsatz der Fortluft als Wärmequelle für die Wärmepumpe ist eine Optimierung des Wirkungsgrades der Wärmepumpe möglich. Gemäß einer Ausführungsform wird die den Fortluftwärmetauscher verlassende Fortluft einem zweckmäßigerweise als Wärmeübertrager ausgebildeten Verdampfer eines Kühlmittelkreislaufs der Wärmepumpe als Wärmequelle zugeführt. Es empfiehlt sich, dass der Wärmepumpe quellseitig bzw. dem Verdampfer der Wärmepumpe die den Fortluftwärmetauscher verlassende Fortluft zusammen mit Außenluft zugeführt wird, wobei vorteilhafterweise durch die Fortluft eine Quelltemperaturanhebung erfolgt. An dem Verdampfer wird einem zum Betrieb der Wärmepumpe erforderlichen Kühlmittel im Heizbetrieb vorzugsweise Energie zugeführt. Es empfiehlt sich, dass im Kühlbetrieb der Wärmepumpe in dem Verdampfer Wärme von dem Kühlmittel der Wärmepumpe auf die Fortluft und/oder die Außenluft übertragen wird.

Weiterhin lehrt die Erfindung zur Lösung des technischen Problems eine Hausstation zur Temperierung eines Gebäudes mit einem Fortluftwärmetauscher, einer Wärmepumpe und einem Lüftungsmodul, wobei dem Fortluftwärmetauscher Außenluft zuführbar ist und aus einem Raum des Gebäudes abgesaugte Luft mit dem Lüftungsmodul in einen Sekundärluftstrom und einen Abluftstrom teilbar ist, wobei der Abluftstrom dem Fortluftwärmetauscher zuführbar ist, wobei in dem Fortluftwärmetauscher zur Temperierung der Außenluft Wärme von einer Abluft auf die Außenluft oder Wärme von der Außenluft auf die Abluft übertragbar ist, wobei die in dem Fortluftwärmetauscher temperierte Außenluft dem Gebäude als Zuluft zuführbar ist, wobei mit dem Lüftungsmodul aus dem Raum abgesaugte Sekundärluft der Wärmepumpe zuführbar ist und wobei die Sekundärluft mit der Wärmepumpe temperierbar ist, wobei die mit der Wärmepumpe temperierte Sekundärluft durch das Lüftungsmodul zur Temperatureinstellung einer Raumluft in das Gebäude zurückführbar ist. Zweckmäßigerweise verfügt die Hausstation über ein Frischluftleitungssystem, mit welchem Frischluftleitungssystem Außenluft, vorzugsweise aus der Umgebung des Gebäudes, ansaugbar ist und dem Fortluftwärmetauscher zuführbar ist. Die in dem Fortluftwärmetauscher temperierte Außenluft wird mit dem Frischluftleitungssystem dem Gebäude zugeführt. Zweckmäßigerweise ist mit dem Frischluftleitungssystem Abluft aus dem Gebäude absaugbar, welche Abluft dem Fortluftwärmetauscher und nach dem Durchlaufen des Fortluftwärmetauschers der Umgebung des Gebäudes als Fortluft zugeführt wird. Zweckmäßigerweise verfügt das Lüftungsmodul über zumindest einen bevorzugt in dem Frischluftleitungssystem angeordneten Ventilator und bevorzugt über zumindest zwei zweckmäßigerweise jeweils in dem Frischluftleitungssystem angeordnete Ventilatoren, wobei ein Zuluftventilator die Zuluft in das Gebäude fördert und ein Abluftventilator den aus der abgesaugten Luft abgezweigten Abluftstrom zu dem Rotationswärmetauscher pumpt.

Es empfiehlt sich, dass die Hausstation ein Sekundärluftleitungssystem aufweist, mit welchem Sekundärluftleitungssystem der aus der abgesaugten Luft abgezweigte Sekundärluftstrom zu dem Lüftungsmodul und von dem Lüftungsmodul zu dem Gebäude bzw. in einen Raum des Gebäudes pumpbar ist. Es empfiehlt sich, dass vorzugsweise das Sekundärluftleitungssystem bevorzugt in dem Lüftungsmodul zweckmäßigerweise durch mechanische Lüftungsklappen von der Wärmepumpe, vorzugsweise von einem Wärmeübertrager der Wärmepumpe, getrennt ist, insbesondere wenn die Sekundärluft bzw. der Sekundärluftstrom nicht temperiert wird. Gemäß einer Ausführungsform wird eine Verbindung zwischen dem Sekundärluftleitungssystem bzw. dem Sekundärluftstrom und der Wärmepumpe, bevorzugt dem Wärmeübertrager der Wärmepumpe, beispielsweise durch Öffnen der Lüftungsklappen hergestellt, wenn die Sekundärluft durch die Wärmepumpe temperiert wird. Zweckmäßigerweise weist das Lüftungsmodul zumindest einen Sekundärluftventilator empfohlenermaßen in dem Sekundärluftleitungssystem und/oder vorzugsweise einen Sekundärluftfilter bevorzugt in dem Sekundärluftleitungssystem auf, wobei zweckmäßigerweise die aus dem Raum bzw. aus dem Gebäude entnommene Sekundärluft bevorzugt durch den Sekundärluftfilter und besonders bevorzugt nach einem Wärmetransfer an dem Wärmeübertrager der Wärmepumpe in den Raum bzw. in das Gebäude zurückgefördert wird. Es liegt im Rahmen der Erfindung, dass in einem Kühlbetrieb der Wärmepumpe die Sekundärluft und vorzugsweise ausschließlich die Sekundärluft von der Wärmepumpe kühlbar ist. Zweckmäßigerweise ist eine Temperatur der Außenluft im Kühlbetrieb höher als eine Temperatur der Fortluft bzw. der Raumluft. Gemäß einer Ausführungsform ist die Wärmepumpe in einem Heizbetrieb betreibbar, in welchem Heizbetrieb bevorzugt ausschließlich die Sekundärluft von der Wärmepumpe erwärmt wird. In dem Heizbetrieb ist die Temperatur der Raumluft bzw. der Abluft empfohlenermaßen größer als die Temperatur der Außenluft. Besonders bevorzugt ist die Zuluft abgesehen von der Wärmeübertragung in dem Fortluftwärmetauscher nicht zusätzlich heizbar oder kühlbar. Es liegt im Rahmen der Erfindung, dass lediglich die Sekundärluft durch ein Zusammenwirken des Lüftungsmoduls mit der Wärmepumpe kühlbar bzw. erwärmbar ist.

Gemäß einer bevorzugten Ausführungsform ist der Fortluftwärmetauscher ein Rotationswärmetauscher. Zweckmäßigerweise wird mit dem Fortluftwärmetauscher im Heizbetrieb Wärme von der Abluft auf die Außenluft übertragen. Gemäß einer alternativen Ausführungsform wird in dem Kühlbetrieb Wärme von der Außenluft in dem Fortluftwärmetauscher auf die Abluft übertragen. Besonders bevorzugt ist mit dem Fortluftwärmetauscher eine Feuchtigkeit der Abluft auf die Außenluft übertragbar. Vorteilhafterweise zeichnet sich die Zuluft durch den gleichen bzw. im Wesentlichen gleichen Feuchtegehalt aus wie die Abluft. Es ist möglich, dass lediglich Feuchtigkeit von der Abluft auf die Außenluft übertragen wird, wenn beispielsweise die Abluft die gleiche bzw. ungefähr die gleiche Temperatur wie die Außenluft aufweist.

Gemäß einer bevorzugten Ausführungsform ist unabhängig von der Temperierung der Sekundärluft durch die Wärmepumpe ein Wärmeträgermedium mit der Wärmepumpe erwärmbar. Die Wärmepumpe weist vorzugsweise einen Kühlmittelkreislauf auf, in welchem Kühlmittelkreislauf ein Verdichter, ein Verflüssiger und ein Verdampfer angeordnet ist. Gemäß einer Ausführungsform ist der Verflüssiger als Wärmeübertrager ausgebildet, mit welchem Wärmeübertrager Wärme von der Wärmepumpe bzw. von einem in dem Kühlmittelkreislauf strömenden Kühlmittel auf die Sekundärluft bzw. Wärme von der Sekundärluft auf das Kühlmittel übertragbar ist. Bewährtermaßen ist der Verdampfer als Wärmeübertrager ausgebildet, mit welchem Verdampfer im Heizbetrieb Wärme vorzugsweise von dem den Fortluftwärmetauscher verlassenden Fortluftstrom und/oder der Außenluft auf das Kühlmittel und im Kühlbetrieb Wärme von dem Kühlmittel auf die Fortluft und/oder Außenluft übertragbar ist. Es ist möglich, dass der Verflüssiger und/oder der Verdampfer jeweils als Lamellenwärmetauscher und bevorzugt jeweils als Luft-Lamellenwärmetauscher ausgebildet sind. Zwischen dem Verflüssiger und dem Verdampfer ist zweckmäßigerweise eine Expansionseinheit vorgesehen, welche Expansionseinheit besonders bevorzugt bidirektional betreibbar ist bzw. von dem Kühlmittel bidirektional durchströmbar ist. Die Expansionseinheit verfügt beispielsweise über ein Expansionsventil, das zwischen zwei Trocknern angeordnet ist, welche Trockner empfohlenermaßen jeweils als Filtertrockner ausgebildet sind. Besonders bevorzugt ist in den Kühlmittelkreislauf ein Wärmetauscher integriert, mit welchem Wärmetauscher Wärme von dem in dem Kühlmittelkreislauf strömenden Kühlmittel auf das Wärmeträgermedium übertragbar ist. Auf diese Weise ist es beispielsweise möglich, mit dem Wärmeträgermedium vorzugsweise unabhängig von der Temperierung der Sekundärluft Wärme für beliebige Heizzwecke zur Verfügung zu stellen. Vorteilhafterweise ist eine Erwärmung des Wärmeträgermediums mit der Wärmepumpe im Heizbetrieb und im Kühlbetrieb möglich. Besonders bevorzugt ist in den Kühlmittelkreislauf eine Stelleinrichtung, die beispielsweise als Mehrwegeventil ausgebildet ist, integriert. Im Heizbetrieb verbindet die Stelleinrichtung bevorzugt einen Ausgang des Wärmetauschers mit einem Eingang des Verflüssigers. Auf diese Weise wird das im Heizbetrieb von dem Verdichter komprimierte Kühlmittel zunächst dem Wärmetauscher zugeführt und strömt dann von dem Wärmetauscher durch einen ersten Strömungskanal der in einer Heizstellung befindlichen Stelleinrichtung zu dem Verflüssiger, von welchem Verflüssiger aus das Kühlmittel durch die Expansionseinheit vorzugsweise als entspanntes Kühlmittel zu dem Verdampfer strömt. Von dem Verdampfer fließt das entspannte und vorzugsweise im Verdampfer erwärmte Kühlmittel durch einen zweiten Strömungskanal der Stelleinrichtung im Heizbetrieb zurück zu dem Verdichter.

In einer Kühlstellung der Stelleinrichtung strömt das durch den Verdichter komprimierte Kühlmittel zunächst von dem Verdichter zu dem Wärmetauscher und durch einen dritten Strömungskanal der Stelleinrichtung zu einem Ausgang des Verdampfers. In dem Verdampfer gibt das Kühlmittel im Kühlbetrieb vorzugsweise Wärme an die Fortluft und/oder Außenluft ab und strömt dann vorzugsweise durch die Expansionseinheit zu einem Ausgang des Verflüssigers. In dem Verflüssiger nimmt das Kühlmittel besonders bevorzugte Wärme aus der Sekundärluft auf und strömt dann als erwärmtes Kühlmittel durch einen Eingang des Verflüssigers und einen vierten Strömungskanal der Stelleinrichtung zurück zu dem Verdichter. Vorteilhafterweise sind in dem Kühlmittelkreislauf in Strömungsrichtung des Kühlmittels vor und hinter dem Verdichter jeweils ein Drucksensor und jeweils ein Temperatursensor angeordnet. Empfohlenermaßen sind die Temperatursensoren jeweils als NTC-Temperatursensoren (Negative Temperature Coefficient-Temperatursensoren) ausgebildet. Werden durch die Temperatursensoren einen vorgegebenen Schwellenwert überschreitende Temperaturen festgestellt, wird durch die Sensoren eine Deaktivierung des Verdichters bewirkt. Wird im Heizbetrieb in dem Verdampfer bzw. auf einer Saugseite des Verdichters ein Druck von zumindest 3 bar, bevorzugt von zumindest 5 bar detektiert, wird ein den Verdampfer mit Fortluft und/oder Außenluft beaufschlagender Lüfter aktiviert. Wird im Kühlbetrieb am Ausgang bzw. auf einer Druckseite des Verdichters ein Druck in dem Kühlmittelkreislauf von zumindest 25 bar und zumindest 35 bar detektiert, wird zweckmäßigerweise der Lüfter des Verdampfers aktiviert, wodurch vorteilhafterweise dem Verdampfer Fortluft und/oder Außenluft zugeführt wird.

Gemäß einer Ausführungsform wird der Zuluftventilator und/oder der Fortluftventilator zusammen mit dem Verdichter der Wärmepumpe angesteuert. Zweckmäßigerweise wird der Wärmepumpe bzw. dem Verdampfer durch eine synchronisierte Aktivierung des Verdichters mit dem Zuluftventilator und/oder Fortluftventilator beim Temperieren der Sekundärluft und/oder beim Bereitstellen des erwärmten Wassers Fortluft und/oder Außenluft als Wärmequelle zugeführt. Es hat sich bewährt, dass im Kühlbetrieb der Zuluftventilator und/oder der Fortluftventilator aktiviert wird, wobei dem Verdampfer zweckmäßigerweise mit dem Fortluftventilator und/oder Zuluftventilator Fortluft zugeführt wird.

Zur Vermeidung von Druckschlägen empfiehlt es sich, einen Druck im Kühlmittelkreislauf beim Umschalten von dem Heizbetrieb in den Kühlbetrieb bzw. von dem Kühlbetrieb in den Heizbetrieb vorzugsweise durch eine Verminderung der Leistung des Verdichters zu senken. Zweckmäßigerweise erfolgt die Druckabsenkung in dem Kühlmittelkreislauf durch eine Verminderung der Drehzahl des Kompressors (Verdichters).

Vorteilhafterweise verfügt die Hausstation über einen integrierten Trinkwasserspeicher, in welchem erwärmtes Trinkwasser vorrätig haltbar ist. Zweckmäßigerweise ist das Trinkwasser mit dem Wärmeträgermedium erwärmbar. Es empfiehlt sich, dass in dem integrierten Trinkwasserspeicher ein vorzugsweise innenliegender Wärmeübertrager angeordnet ist, mit welchem innenliegenden Wärmeübertrager Wärme des Wärmeträgermediums auf das Trinkwasser übertragbar ist. Grundsätzlich ist es möglich, dass die Hausstation über einen Warmwasserspeicher verfügt, in welchem Warmwasserspeicher beispielsweise erwärmtes Brauchwasser und/oder Heizungswasser vorrätig haltbar ist. Zweckmäßigerweise verfügt der Warmwasserspeicher über einen Warmwasserwärmeübertrager, mit dem Wärme von dem Wärmeträgermedium auf das Brauchwasser und/oder Heizungswasser übertragbar ist. Gemäß einer bevorzugten Ausführungsform verfügt die Hausstation über eine Zusatzheizeinrichtung, mit welcher Zusatzheizeinrichtung das Wärmeträgermedium erwärmbar ist. Die Zusatzheizeinrichtung ist beispielsweise als Elektroheizung und/oder Solarthermiemodul ausgebildet. Besonders bevorzugt ist eine Elektroheizpatrone als Zusatzheizung einsetzbar. Gemäß einer Ausführungsform ist ein Wärmeträgermediumkreislauf vorgesehen, in dem das Wärmeträgermedium von dem Wärmetauscher zu dem Wärmeübertrager förderbar ist. Es empfiehlt sich, dass in den Wärmeträgermediumkreislauf bevorzugt die Zusatzheizeinrichtung und/oder zumindest eine Pumpeinrichtung eingebunden ist, mit welcher Pumpeinrichtung das Wärmeträgermedium in dem Wärmeträgermediumkreislauf umpumpbar ist.

Empfohlenermaßen ist die Wärmepumpe vorzugsweise eine leistungsregelbare Luft/Wasser-Wärmepumpe. Quellseitig dient bei der Wärmepumpe vorteilhafterweise die Fortluft und/oder die Außenluft als Wärmequelle. Die in der Fortluft und/oder in der Außenluft enthaltene Wärme wird vorteilhafterweise in dem Verdampfer auf das Kühlmittel übertragen. Es liegt im Rahmen der Erfindung, dass das durch den Verdichter komprimierte und vorzugsweise erwärmte Kühlmittel Wärme in dem Wärmetauscher auf das Wärmeträgermedium, vorzugsweise auf Pufferwasser, überträgt, und dass mit dem Verflüssiger ein Wärmetransfer zwischen dem Kühlmittel und der Sekundärluft erfolgt. Die Wärmepumpe beinhaltet empfohlenermaßen ein Luft/Luft-Wärmemodul zur Erwärmung der Sekundärluft und ein Luft/Wasser-Modul zur Erwärmung des Wärmeträgermediums bzw. Pufferwassers.

Es ist möglich, dass die Hausstation eine Energieerzeugungseinheit, vorzugsweise eine Photovoltaikeinheit aufweist. Zweckmäßigerweise stellt die Photovoltaikeinheit die elektrische Energie zum Betrieb der Wärmepumpe und/oder des Lüftungsmoduls bereit. Dadurch, dass die Hausstation zumindest einen Teil der erforderlichen elektrischen Energie und vorzugsweise die gesamte zum Betrieb der Hausstation erforderliche Energie erzeugt, zeichnet sich die erfindungsgemäße Hausstation durch eine besondere Nachhaltigkeit und Kohlendioxidemissionsarmut aus. Gemäß einer Ausführungsform verfügt die Hausstation über eine Detektoreinheit, mit welcher Detektoreinheit beispielsweise eine Außentemperatur und/oder eine Sonneneinstrahlung detektierbar ist. Es ist möglich, dass Fenster des Gebäudes verschattet werden, wenn durch die Detektoreinheit eine Sonneneinstrahlung und/oder eine Temperatur festgestellt wird, die oberhalb einer vorgebbaren, maximalen Sonneneinstrahlung und/oder oberhalb einer vorgegebenen Temperatur liegen. Zweckmäßigerweise werden durch die Verschattung eine unkontrollierte Temperierung und ein unerwünschtes Erwärmen des Raumes bzw. des Gebäudes vermieden. Es empfiehlt sich, dass Rollläden des Gebäudes von der Detektoreinheit gesteuert werden, wobei zweckmäßigerweise Fenster des Gebäudes mit den Rollläden verschlossen werden, wenn beispielsweise die Außentemperatur einen vorgegebenen Schwellenwert unterschreitet. Durch das Verschließen von Fensteröffnungen mit Rollläden wird vorzugsweise eine zusätzliche Isolierung des Gebäudes bzw. der Fensterflächen bereitgestellt, wodurch vorteilhafterweise die von der Wärmepumpe aufzubringende Wärme zur Temperierung der Sekundärluft vermindert wird.

Der Erfindung liegt die Erkenntnis zugrunde, dass mit dem erfindungsgemäßen Verfahren und der erfindungsgemäßen Hausstation eine optimale Belüftung eines Gebäudes erfolgt. Wesentlich bei dem erfindungsgemäßen Verfahren ist, dass die Versorgung des Gebäudes mit Zuluft bzw. Frischluft von der Temperierung des Gebäudes abgekoppelt ist. Insbesondere bei der Verwendung des erfindungsgemäßen Verfahrens in einem Niedrigenergiehaus bzw. Passivhaus ist eine Verschlechterung der Luftqualität nicht zu befürchten, wodurch beispielsweise auch die Bildung von Schimmelkulturen vermieden wird. Durch die effiziente Nutzung der in der Fortluft enthaltenen Energie zeichnen sich das erfindungsgemäße Verfahren und die erfindungsgemäße Hausstation durch eine besondere Energieeffizienz aus. Weiterhin erlaubt die erfindungsgemäße Hausstation und das erfindungsgemäße Verfahren die von der Temperierung der Gebäudeluft unabhängige Erzeugung von erwärmtem Trinkwasser. Das erfindungsgemäße Verfahren zeichnet sich dabei durch eine einfache und flexible Steuerbarkeit aus. Fernerhin ist die erfindungsgemäße Hausstation problemlos in bestehende Gebäude und auch bestehende Heizungsanlagen integrierbar.

Nachfolgend wird die Erfindung anhand einer lediglich ein Ausführungsbeispiel darstellenden Zeichnung erläutert. Es zeigen schematisch
- Fig. 1: einen vereinfachten Aufbau der erfindungsgemäßen Hausstation,
- Fig. 2: eine vereinfachte, erfindungsgemäße Hausstation im Heizbetrieb und
- Fig. 3: eine vereinfachte, erfindungsgemäße Hausstation im Kühlbetrieb.

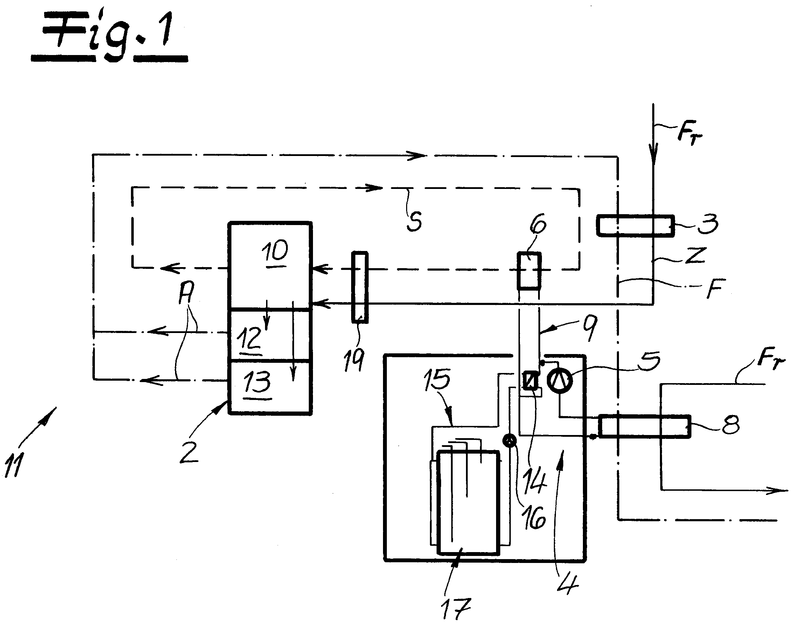

In Fig. 1 ist eine erfindungsgemäße Hausstation 1 dargestellt, mit der ein Gebäude 2 temperierbar ist. Die Hausstation 1 verfügt über einen Fortluftwärmetauscher 3, der in dem Ausführungsbeispiel als Rotationswärmetauscher 3 ausgebildet ist. Weiterhin verfügt die Hausstation 1 gemäß Fig. 1 über eine Wärmepumpe 4, welche Wärmepumpe 4 über einen Verdichter (Kompressor) 5, einen Verflüssiger 6, eine Expansionseinheit 7 und einen Verdampfer 8 verfügt. Der Verdichter 5, Verflüssiger 6, die Expansionseinheit 7 und der Verdampfer 8 sind in einem Kühlmittelkreislauf 9 angeordnet, wobei der Kühlmittelkreislauf 9 zur bidirektionalen Führung des Kühlmittels ausgelegt ist. In Fig. 1 ist dargestellt, dass außerhalb des Gebäudes 2 Außenluft bzw. Frischluft Fr ansaugbar ist, welche Frischluft Fr durch den Rotationswärmetauscher 3 gefördert und in das Gebäude 2 eingeführt wird. In entgegengesetzter Richtung zu der Außenluft Fr strömt aus dem Gebäude 2 abgesaugte Abluft A durch den Rotationswärmetauscher 3, wobei in dem Rotationswärmetauscher 3 in der Abluft A enthaltene Wärme und Feuchtigkeit auf die Außenluft Fr übertragen wird. Die Abluft A strömt nach dem Verlassen des Rotationswärmetauschers 3 als Fortluft F den Verdampfer 8 der Wärmepumpe 4 an, so dass die Fortluft F gleichsam als Wärmequelle für die Wärmepumpe 4 dient. Ergänzend ist in Fig. 1 dargestellt, dass dem Verdampfer 8 bzw. der Quellenseite der Wärmepumpe 4 Außenluft Fr als Arbeitsmedium bereitgestellt wird.

Gemäß Fig. 1 wird einem Wohnbereich 10 ein Luftstrom entnommen, welcher Luftstrom in einen Sekundärluftstrom S und einen Abluftstrom A in einem Lüftungsmodul 11 der Wärmepumpe 4 aufgeteilt wird. Der Sekundärluftstrom S wird dem Verflüssiger 6 der Wärmepumpe 4 zugeführt, in welchem Verflüssiger 6 Wärme von dem Kühlmittelkreislauf 9 der Wärmepumpe 4 auf eine Sekundärluft S des Sekundärluftstroms S übertragen wird. Die auf diese Weise temperierte Sekundärluft S bzw. der temperierte Sekundärluftstrom S wird gemäß Fig. 1 dann in den Wohnbereich 10 zurückgeführt. In Fig. 1 ist dargestellt, dass die Sekundärluft S vor dem Einführen in den Wohnbereich 10 in dem Mischbehälter 19 mit der Zuluft Z vermischt wird.

Fig. 1 zeigt weiterhin, dass der Abluftstrom A vorzugsweise und gemäß dem Ausführungsbeispiel durch einen Nassraum 12 und eine Küche 13 geführt wird, woraufhin der Abluftstrom A dann aus dem Gebäude abgesaugt und dem Rotationswärmetauscher 3 zugeführt wird.

Vorzugsweise und gemäß Fig. 1 ist in den Kühlmittelkreislauf 9 ein Wärmetauscher 14 eingebunden, welcher Wärmetauscher 14 Bestandteil eines Wärmeträgermediumkreislaufs 15 ist. In dem Ausführungsbeispiel ist ein in dem Wärmeträgermediumkreislauf 15 strömendes Wärmeträgermedium Pufferwasser. Das Pufferwasser wird vorzugsweise von einer Pumpe 16 gefördert und strömt von dem Wärmetauscher 14 zu einem nicht dargestellten innenliegenden Wärmeübertrager, der innenliegend in einem Warmwasserspeicher 17 angeordnet ist. Mit dem innenliegenden Wärmeübertrager ist gemäß dem Ausführungsbeispiel in dem als integrierten Trinkwasserspeicher ausgebildeten Warmwasserspeicher 17 bevorratetes Trinkwasser erwärmbar, das als erwärmtes Trinkwasser einem nicht dargestellten Verbraucher zuführbar ist.

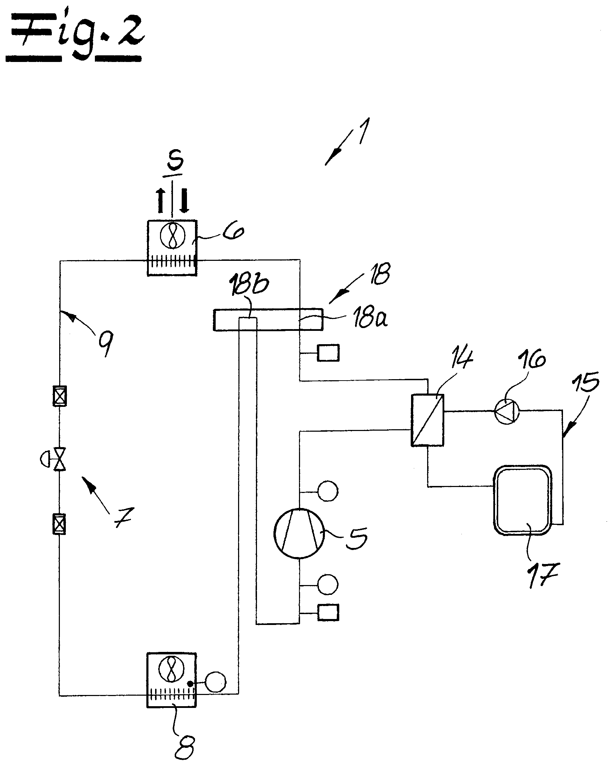

In Fig. 2 ist eine Hausstation 1 im Heizbetrieb dargestellt. Das von dem Verdichter 5 temperierte Kühlmittel durchströmt den Wärmetauscher 14 und strömt nach dem Durchlaufen eines ersten Strömungskanals 18a einer als Vierwegeventil ausgebildeten Stelleinrichtung 18 zum Verflüssiger 6. In dem Verflüssiger 6 gibt das Kühlmittel vorzugsweise und gemäß Fig. 1 Kondensationswärme an die Sekundärluft S ab und gelangt nach dem Entspannen in der Expansionseinheit 7 in den Verdampfer 8. In dem Verdampfer 8 wird dem Kühlmittel gemäß dem Ausführungsbeispiel Energie aus der Fortluft F zugeführt, woraufhin das Kühlmittel nach einem Durchströmen eines zweiten Strömungskanals 18b der Stelleinrichtung 18 zurück zu dem Verdichter 5 strömt. In Fig. 2 ist dargestellt, dass im Heizbetrieb in Strömungsrichtung des Kühlmittels hinter dem Verdichter 5 der Wärmetauscher 14 angeordnet ist, mit welchem Wärmetauscher 14 Wärme auf das in dem Wärmeträgermediumkreislauf 15 strömende Pufferwasser übertragen wird, mit welchem Pufferwasser das in dem Warmwasserspeicher zu erwärmende Brauchwasser erwärmt wird. Das Pufferwasser wird mit der Pumpe 16 in dem Wärmeträgermeidumkreislauf 15 umgepumpt.

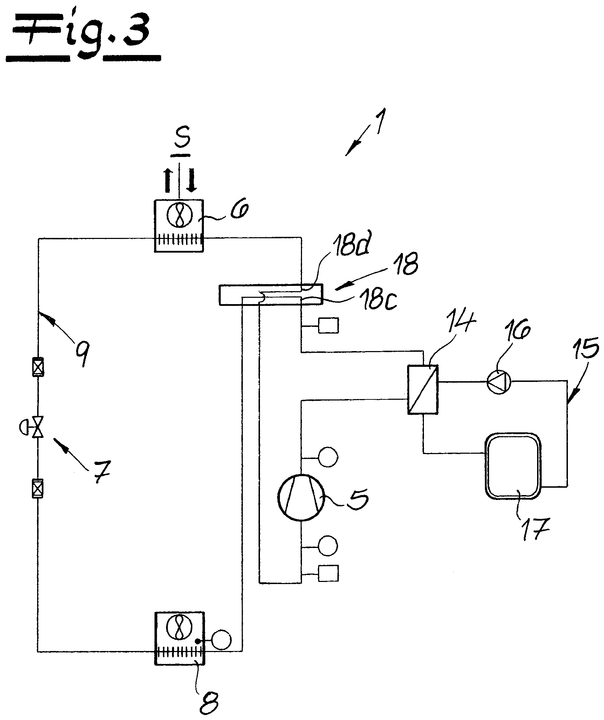

In Fig. 3 ist die erfindungsgemäße Hausstation 1 im Kühlbetrieb gezeigt. Das in dem Verdichter 5 verdichtete Kühlmittel durchströmt den Wärmetauscher 14, in welchem Wärmetauscher 14 Wärme von dem Kühlmedium auf das Pufferwasser übertragen und von dem Pufferwasser über den nicht dargestellten innenliegenden Wärmeübertrager an das in dem Trinkwasserspeicher 17 aufgenommene Brauchwasser übertragen wird. Nach dem Durchströmen des Wärmetauschers 14 wird das Kühlmittel durch einen dritten Strömungskanal 18c der Stelleinrichtung 18 zu dem Verdampfer 8 des Kühlmittelkreislaufs 9 geleitet, in welchem Verdampfer 8 das Kühlmittel Wärme an die Fortluft F abgibt. Das durch die Fortluft F gekühlte Wärmeträgermedium durchströmt die Expansionseinheit 7, wodurch das Kühlmittel im Kühlbetrieb abgekühlt wird. In dem Verflüssiger 6 nimmt das Kühlmittel im Kühlbetrieb gemäß Fig. 3 Wärme aus dem Sekundärluftstrom S auf, wodurch der Sekundärluftstrom S abgekühlt und das Kühlmittel erwärmt wird. Auf diese Weise ist ein Abkühlen der Sekundärluft S bzw. der Gebäudeluft möglich. Durch einen vierten Strömungskanal 18d der Stelleinrichtung 18 wird das durch die Sekundärluft S aufgewärmte Kühlmittel dem Verdichter 5 des Kühlmittelkreislaufs 9 zugeführt. In den Fig. 2 und 3 ist der Fortluftstrom F der besseren Übersicht halber nicht dargestellt.

## Patentansprüche

1. Verfahren zur Temperierung eines Gebäudes, wobei aus dem Gebäude (2) ein Luftstrom abgezogen wird, wobei der Luftstrom in zumindest einen Sekundärstrom S und in zumindest einen Abluftstrom A aufgeteilt wird, wobei der Abluftstrom A einem Fortluftwärmetauscher (3) zugeführt wird, wobei in dem Fortluftwärmetauscher (3) Wärme von einer Abluft A des Abluftstroms A auf eine dem Fortluftwärmetauscher (3) zugeführte Außenluft Fr eines Außenluftstroms Fr oder Wärme der Außenluft Fr auf die Abluft A zur Temperierung der Außenluft Fr übertragen wird, wobei die in dem Fortluftwärmetauscher (3) temperierte Außenluft Fr dem Gebäude (2) als Zuluft Z zugeführt wird, wobei der Sekundärstrom S zumindest einer Wärmepumpe (4) zugeführt und mit der Wärmepumpe (4) temperiert wird, wobei in einem Heizbetrieb der Wärmepumpe (4) der Sekundärstrom S durch die Wärmepumpe (4) erwärmt wird, wobei der mit der Wärmepumpe (4) temperierte Sekundärstrom S in das Gebäude (2) zurückgeführt wird,
**dadurch gekennzeichnet, dass**
der Wärmepumpe (4) quellseitig Abluft A und/oder Fortluft F zugeführt wird, und dass
in einem Kühlbetrieb der Wärmepumpe (4) der Sekundärstrom S durch die Wärmepumpe (4) gekühlt wird, wobei die Wärmepumpe (4) aus dem Heizbetrieb in den Kühlbetrieb umschaltbar ist.

2. Verfahren nach Anspruch 1, wobei der Abluftstrom A und der Außenluftstrom Fr dem Fortluftwärmetauscher (3) jeweils permanent und jeweils vorzugsweise regelbar zugeführt wird.

3. Verfahren nach einem der Ansprüche 1 oder 2, wobei der Feuchtigkeitsgehalt der Zuluft Z und/oder der Sekundärluft S eingestellt wird.

4. Verfahren nach einem der Ansprüche 1 bis 3, wobei mit der Wärmepumpe (4) die Sekundärluft S gleichzeitig mit der Erwärmung eines Wärmeträgermediums temperiert wird, mit welchem Wärmeträgermedium vorzugsweise Wasser erwärmt wird.

5. Verfahren nach einem der Ansprüche 1 bis 4, wobei der Sekundärluftstrom S mit der Wärmepumpe (4) gekühlt oder erwärmt wird.

6. Verfahren nach einem der Ansprüche 1 bis 5, wobei eine Temperatur des Gebäudes (2) mit einem vom Abluftstrom A beaufschlagten Sensor erfasst wird, wobei mit dem Sensor zumindest eine aus der Gruppe "Temperatur, Luftfeuchtigkeit, Kohlendioxidkonzentration, Anwesenheitsfunktion" ausgewählte Messgröße überwacht wird.

7. Verfahren nach einem der Ansprüche 1 bis 6, wobei eine Leistung der Wärmepumpe (4) und/oder der Zuluftstrom Z und/oder der Abluftstrom A und/oder der Sekundärluftstrom S vorzugsweise durch den Sensor gesteuert wird.

8. Hausstation, insbesondere zur Durchführung des Verfahrens nach einem der Ansprüche 1 bis 7, zur Temperierung eines Gebäudes (2) mit einem Fortluftwärmetauscher (3), einer Wärmepumpe (4) und einem Lüftungsmodul (11), wobei dem Fortluftwärmetauscher (3) Außenluft Fr zuführbar ist und aus einem Raum des Gebäudes (2) abgesaugte Luft mit dem Lüftungsmodul (11) in einen Sekundärluftstrom S und einen Abluftstrom A teilbar ist, wobei der Abluftstrom A dem Fortluftwärmetauscher (3) zuführbar ist, wobei in dem Fortluftwärmetauscher (3) zur Temperierung der Außenluft Fr Wärme von einer Abluft A auf die Außenluft Fr oder Wärme von der Außenluft Fr auf die Abluft A übertragbar ist, wobei die in dem Fortluftwärmetauscher (3) temperierte Außenluft Fr dem Gebäude (2) als Zuluft Z zuführbar ist, wobei aus dem Gebäude (2) abgesaugte Sekundärluft S der Wärmepumpe (4) zuführbar ist und wobei die Sekundärluft S mit der Wärmepumpe (4) temperierbar ist, wobei in einem Heizbetrieb der Wärmepumpe (4) der Sekundärluftstrom S durch die Wärmepumpe (4) erwärmbar ist, wobei die mit der Wärmepumpe (4) temperierte Sekundärluft S durch das Lüftungsmodul (11) zur Temperatureinstellung einer Raumluft in das Gebäude (2) zurückführbar ist,
**dadurch gekennzeichnet, dass**
der Wärmepumpe (4) quellseitig Abluft A und/oder Fortluft F zugeführt wird und dass
in einem Kühlbetrieb der Wärmepumpe (4) der Sekundärluftstrom S durch die Wärmepumpe (4) kühlbar ist, wobei die Wärmepumpe (4) aus dem Heizbetrieb in den Kühlbetrieb umschaltbar ist.

9. Hausstation nach Anspruch 8, wobei der Fortluftwärmetauscher (3) ein Rotationswärmetauscher (3) ist.

10. Hausstation nach einem der Ansprüche 8 oder 9, wobei vorzugsweise unabhängig von der Temperierung der Sekundärluft S durch die Wärmepumpe (4) ein Wärmeträgermedium mit der Wärmepumpe (4) erwärmbar ist.

11. Hausstation nach einem der Ansprüche 8 bis 10, wobei die Hausstation (1) über einen integrierten Trinkwasserspeicher (17) verfügt, in welchem erwärmtes Trinkwasser vorrätig haltbar ist.

12. Hausstation nach einem der Ansprüche 8 bis 11, wobei die Wärmepumpe (4) vorzugsweise eine leistungsregelbare Luft/Wasser-Wärmepumpe ist.

13. Hausstation nach einem der Ansprüche 8 bis 12, wobei die Hausstation (1) eine Energieerzeugungseinheit, vorzugsweise eine Photovoltaikeinheit aufweist.

## Claims

1. Method of temperature controlling a building, wherein a current of air is drawn from the building (2), wherein the current of air is divided into at least one secondary airflow S and into at least one outgoing airflow A, wherein the outgoing airflow A is taken to an exhaust air heat exchanger (3), wherein in the exhaust air heat exchanger (3) heat is transferred from outgoing air A of the outgoing airflow A to outside air Fr of an outside air flow Fr supplied to the exhaust air heat exchanger (3) or heat is transferred from the outside air F to the outgoing air A to adjust the temperature of the outside air Fr, wherein the outside air which has been temperature-controlled in the exhaust air heat exchanger (3) is supplied to the building (2) as incoming air Z, wherein the secondary flow S is taken to at least one heat pump (4) and temperature-controlled with the heat pump (4), wherein in heating operation of the heat pump (4) the secondary flow S is heated by the air pump (4), wherein the secondary flow S which has been temperature-controlled with the heat pump (2) is returned to the building (2),
**characterised in that**
on the source side outgoing air A and/or exhaust air F is supplied to the heat pump (4) and **in that**
in cooling operation of the heat pump (4) the secondary flow S is cooled by the heat pump (4), wherein the heat pump (4) can be switched over from heating operation to cooling operation.

2. Method according to claim 1 wherein the outgoing airflow A and the outside airflow Fr is in each case supplied to the exhaust air heat exchanger (3) permanently and preferably variably.

3. Method according to any one of claims 1 or 2 wherein the humidity content of the incoming air Z and/or secondary air S is adjusted.

4. Method according to any one of claims 1 to 3 wherein with the heat pump (4) the secondary air S is simultaneously temperature-controlled with the heating of a heat transfer medium, with which heat transfer medium, preferably water, is heated.

5. Method according to any one of claims 1 to 4 wherein the secondary airflow S is cooled or heated with the heat pump (4).

6. Method according to any one of claims 1 to 5 wherein a temperature of the building (2) is recorded by a sensor on which the outgoing airflow A acts, wherein with this sensor at least one measurement parameter from the group "temperature, relative humidity, carbon dioxide concentration, presence function" is monitored.

7. Method according to any one of claims 1 to 6 wherein an output of the heat pump (4) and/or the incoming airflow Z and/or the outgoing airflow A and/or the secondary airflow S is preferably controlled by the sensor.

8. House station, more particularly for implementing the method according to any one of claims 1 to 7 for temperature-controlling a building (2) with an exhaust air heat exchanger (3), a heat pump (4) and a ventilation module (11), wherein outside air Fr can be supplied to the exhaust air heat exchanger (3) and air drawn out of a room of the building (2) with the ventilation module (11) can be divided into a secondary airflow S and an outgoing airflow A, wherein the outgoing airflow A can be supplied to the exhaust air heat exchanger (3), wherein in the exhaust air heat exchanger (3) heat is transferrable from the outgoing air A to the outside air Fr or heat is transferrable from the outside air F wherein the outside air, temperature-controlled in the exhaust air heat exchanger (3), is supplied to the building (2) as incoming air Z, wherein the secondary flow S drawn from the building (2) can be supplied to the heat pump (4) and wherein the secondary air S can be temperature-controlled with the heat pump (4), wherein in heating operation of the heat pump (4) the secondary flow S is heatable by the air pump (4), wherein the secondary flow S which has been temperature-controlled with the heat pump (4) is returned to the building (2) by means of the ventilation module (11),
**characterised in that**
on the source side outgoing air A and/or exhaust air F is supplied to the heat pump (4) and **in that**
in cooling operation of the heat pump (4) the secondary flow S can be cooled by the heat pump (4), wherein the heat pump (4) can be switched over from heating operation to cooling operation.

9. House station according to claim 8 wherein the exhaust air heat exchanger (3) is a rotation heat exchanger (3).

10. House station according to any one of claims 8 or 9 wherein preferably independently of the temperature controlling of the secondary air S by the heat pump (4), a heat exchanger medium can be heated with the heat pump (4).

11. House station according any one of claims 8 to 10, wherein the house station (1) comprises an integrated drinking water reservoir (17) in which heated drinking water is storable.

12. House station according to any one of claims 8 to 11 wherein the heat pump (4) is preferably a variable output air/water heating pump.

13. House station according to any one of claims 8 to 12 wherein the house station (1) comprises an energy generation unit, preferably a photovoltaic unit.

## Revendications

1. Procédé destiné à tempérer un bâtiment, hors du bâtiment (2) étant soutiré un courant d'air, le courant d'air étant divisé en au moins un courant secondaire S et en au moins un courant d'air vicié A, le courant d'air vicié A étant amené vers un échangeur thermique d'air rejeté (3), dans l'échangeur thermique d'air rejeté (3), de la chaleur d'un air vicié A du courant d'air vicié A étant transmise sur un air extérieur Fr d'un courant d'air extérieur Fr alimenté vers l'échangeur thermique d'air rejeté (3) ou de la chaleur de l'air extérieur Fr étant transmise sur l'air vicié A pour tempérer l'air extérieur Fr, l'air extérieur Fr tempéré dans l'échangeur thermique d'air rejeté (3) étant alimenté dans le bâtiment (2) sous forme d'air frais Z, le courant secondaire S étant alimenté vers au moins une pompe à chaleur (4) et tempéré à l'aide de la pompe à chaleur (4), dans un mode chauffage de la pompe à chaleur (4), le courant secondaire S étant chauffé par la pompe à chaleur (4), le courant secondaire S tempéré à l'aide de la pompe à chaleur (4) étant ramené dans le bâtiment (2),
**caractérisé en ce que**
côté source, de l'air vicié A et/ou de l'air rejeté F est alimenté vers la pompe à chaleur (4) et **en ce que**
dans un mode refroidissement de la pompe à chaleur (4), le courant secondaire S est refroidi par la pompe à chaleur (4), la pompe à chaleur (4) étant commutable du mode chauffage dans le mode refroidissement.

2. Procédé selon la revendication 1, le courant d'air vicié A et le courant d'air extérieur Fr étant alimenté vers l'échangeur thermique d'air rejeté (3) chaque fois de manière permanente et chaque fois, de préférence de manière réglable.

3. Procédé selon l'une quelconque des revendications 1 ou 2, le taux d'humidité de l'air frais Z et/ou de l'air secondaire S étant réglé.

4. Procédé selon l'une quelconque des revendications 1 à 3, à l'aide de la pompe à chaleur (4), l'air secondaire S étant tempéré simultanément au chauffage d'un milieu caloporteur, à l'aide duquel milieu caloporteur étant chauffée de préférence de l'eau.

5. Procédé selon l'une quelconque des revendications 1 à 4, le courant d'air secondaire S étant refroidi ou chauffé à l'aide de la pompe à chaleur (4).

6. Procédé selon l'une quelconque des revendications 1 à 5, une température du bâtiment (2) étant détectée par un capteur exposé au courant d'air vicié A, à l'aide du capteur étant supervisée au moins une grandeur de mesure choisie dans le groupe comprenant « la température, l'humidité atmosphérique, la concentration en dioxyde de carbone, la fonction de présence ».

7. Procédé selon l'une quelconque des revendications 1 à 6, une puissance de la pompe à chaleur (4) et/ou le courant d'air frais Z et/ou le courant d'air vicié A et/ou le courant d'air secondaire S étant commandé(e) de préférence par le capteur.

8. Poste domotique, destiné notamment à réaliser le procédé selon l'une quelconque des revendications 1 à 7, pour tempérer un bâtiment (2) à l'aide d'un échangeur thermique d'air rejeté (3), d'une pompe à chaleur (4) et d'un module d'aération (11), de l'air extérieur Fr étant susceptible d'être alimenté vers l'échangeur thermique d'air rejeté (3) et de l'air aspiré hors d'une pièce du bâtiment (2) à l'aide du module d'aération (11) étant divisible en un courant d'air secondaire S et un courant d'air vicié A, le courant d'air vicié A étant susceptible d'être alimenté vers l'échangeur thermique d'air rejeté (3), dans l'échangeur thermique d'air rejeté (3), pour tempérer l'air extérieur Fr, de la chaleur d'un air vicié A étant transmissible sur l'air extérieur Fr ou de la chaleur de l'air extérieur Fr étant transmissible sur l'air vicié A, l'air extérieur Fr tempéré dans l'échangeur thermique d'air rejeté (3) étant susceptible d'être alimenté dans le bâtiment (2) sous forme d'air frais Z, de l'air secondaire S aspiré hors du bâtiment (2) étant susceptible d'être alimenté vers la pompe à chaleur (4) et l'air secondaire S étant susceptible d'être tempéré à l'aide de la pompe à chaleur (4), dans un mode chauffage de la pompe à chaleur (4), le courant d'air secondaire S étant susceptible d'être chauffé par la pompe à chaleur (4), l'air secondaire S tempéré à l'aide de la pompe à chaleur (4) étant susceptible d'être ramené dans le bâtiment (2) par le module d'aération (11), pour le réglage de la température d'un air ambiant,
**caractérisé en ce que**
de l'air vicié A et/ou de l'air rejeté F est alimenté côté source vers la pompe à chaleur (4) et
**en ce que** dans un mode refroidissement de la pompe à chaleur (4), le courant d'air secondaire S est susceptible d'être refroidi par la pompe à chaleur (4), la pompe à chaleur (4) étant commutable du mode chauffage dans le mode refroidissement.

9. Poste domotique selon la revendication 8, l'échangeur thermique d'air rejeté (3) étant un échangeur thermique rotatoire (3).

10. Poste domotique selon l'une quelconque des revendications 8 ou 9, de préférence indépendamment de la mise en température de l'air secondaire S par la pompe à chaleur (4), un milieu caloporteur étant susceptible d'être chauffé à l'aide de la pompe à chaleur (4).

11. Poste domotique selon l'une quelconque des revendications 8 à 10, le poste domotique (1) disposant d'un accumulateur d'eau potable (17), dans lequel de l'eau potable chauffée est susceptible d'être gardée en réserve.

12. Poste domotique selon l'une quelconque des revendications 8 à 11, la pompe à chaleur (4) étant de préférence une pompe à chaleur air/eau à puissance réglable.

13. Poste domotique selon l'une quelconque des revendications 8 à 12, le poste domotique (1) comportant une unité génératrice d'énergie, de préférence une unité photovoltaïque.
